# EUROPÄISCHE PATENTSCHRIFT

(11) **EP 3 315 217 B1**
(45) Veröffentlichungstag und Bekanntmachung des Hinweises auf die Patenterteilung: **10.04.2019**
(21) Anmeldenummer: 17197128.6
(22) Anmeldetag: 18.10.2017
(51) Int. Cl.: B08B 3/02, B08B 13/00, B25J 11/00, B65D 19/44

(54) **AUTOMATISIERTE HOCHDRUCKREINIGUNGSVORRICHTUNG FÜR VERSCHMUTZTE BAUTEILE**
AUTOMATED HIGH PRESSURE CLEANING UNIT FOR DIRTY COMPONENTS
DISPOSITIF DE NETTOYAGE À HAUTE PRESSION AUTOMATISÉ POUR COMPOSANTS SALES

(30) Priorität: 28.10.2016 DE 102016120695
(43) Veröffentlichungstag der Anmeldung: 02.05.2018
(73) Patentinhaber: Buchen Umweltservice GmbH, 50735 Köln (DE)
(72) Erfinder: Radu, Branislav, 53783 Eitorf (DE); Holstein, Uwe, 50171 Kerpen (DE); Ebach, Matthias, 57589 Pracht (DE)
(74) Vertreter: Patentanwälte Bauer Vorberg Kayser

(56) Entgegenhaltungen:
- EP-A2- 0 114 424
- WO-A1-2010/062894
- DE-U1-202005 016 658
- DE-U1-202006 002 645
- US-A- 5 135 420
- US-B1- 6 804 579

## Beschreibung

Die Erfindung bezieht sich auf eine automatisierte Hochdruckreinigungsvorrichtung für verschmutzte Bauteile.

Unter Hochdruck wird im allgemeinen Wasser mit einem Druck von mindestens 800 bar, vorzugsweise höher, beispielsweise über 1.000 oder auch über 1.500 bar verstanden. Die Hochdruckreinigungsvorrichtung arbeitet mit einem Druck von mindestens 500 bar.

Bei der Hochdruckreinigung wird mit Wasserstrahlen gearbeitet, die aufgrund des hohen Drucks eine sehr hohe Durchschlagskraft haben können. Es sind daher besondere und hohe Sicherheitsvorschriften zu beachten. Ohne ausreichenden Schutz können Wasserstrahlen im Hochdruckbereich für eine Person sehr gefährlich sein. So schreibt die bundesgenossenschaftliche Regel BGR 500 u.a. das Tragen besonderer Schutzkleidung für diejenigen Personen vor, die sich in unmittelbarer Nähe des Reinigungsvorgangs befinden. Aber auch mit Schutzkleidung ist der Einsatz von Hochdruckgeräten immer mit einem hohen Risiko behaftet, Verletzungen können nie ganz ausgeschlossen werden. Zudem ist die Bedienung eines Hochdruckreinigungsgerätes aufgrund der enormen Kräfte, die die freiwerdenden Wasserstrahlen ausüben, eine schwere körperliche Arbeit, die eine Belastung für das Personal darstellt, zumal für Personal in Schutzkleidung. Die Schutzkleidung hindert bei der körperlichen Arbeit. Man geht daher zunehmend zu Reinigungsvorrichtungen über, die keinen Aufenthalt einer Person in unmittelbarer Nähe erfordern, sondern ferngesteuert werden können bzw. automatisiert sind. Dann muss die Bedienperson keinen Schutzanzug mehr tragen, sie kann in einer Kabine geschützt und in ausreichender Entfernung vom eigentlichen Reinigungsvorgang arbeiten und alle notwendigen Schritte durchführen. Die Strahlarbeiten finden in der Regel in einem abgesperrten Bereich oder vorzugsweise in einem geschlossenen Raum statt.

Bei Strahlarbeiten treten auch erhebliche Rückstoßkräfte auf, sie können im Bereich oberhalb 40 kg liegen. Für eine Bedienperson stellen derartige Kräfte zumindest auf Dauer eine Herausforderung dar. Es gelingt nicht immer und auch nicht über längere Zeit, den Strahl exakt zu positionieren. Aus der WO2010/062894 ist eine Hochdruckreinigungsvorrichtung gemäß dem Oberbegriff des Anspruchs 1 bekannt.

Aufgabe der Erfindung ist es, die Nachteile der Vorrichtungen nach dem Stand der Technik zu vermeiden und die bekannten Vorrichtungen dahingehend weiterzuentwickeln, dass sie für eine Automatisierung besser geeignet sind, einen verbesserten Schutz für das Bedienpersonal ermöglichen und sich für die Reinigung von Gleichteilen besser eignen.

Diese Aufgabe wird gelöst durch eine Hochdruckreinigungsvorrichtung für verschmutzte Bauteile, insbesondere Bauteile aus der petrochemischen Industrie, die folgende Bestandteile aufweist:
a) ein Basisgestell, das ein Roboterfeld und mindestens ein Bauteilfeld ausbildet,
b) einen Industrieroboter, der auf dem Roboterfeld angeordnet ist, der einen Arbeitsraum aufweist, der sich im Wesentlichen über das mindestens eine Bauteilfeld erstreckt, und der eine Roboterhand aufweist,
c) eine Hochdruck-Wasserdüse, die über einen flexiblen Hochdruckschlauch mit einer Hochdruckversorgung verbunden ist und die an der Roboterhand angeordnet ist,
d) mindestens eine Positioniereinheit, die lösbar mit dem Bauteilfeld verbunden ist und Spannmittel für die lösbare Befestigung eines Bauteils aufweist, wobei das Bauteilfeld Passschrägen aufweist und die Positioniereinheit den Passschrägen angepasste Führungen aufweist, die Passschrägen im Zusammenwirken mit den Führungen ein Positionieren der Positioniereinheit auf dem Bauteilfeld bewirken und im eingesetzten Zustand einer Positioniereinheit auf dem Bauteilfeld die Führungen an den Passschrägen anliegen.

Bei dieser Hochdruckreinigungsvorrichtung arbeitet der Roboter über dem mindestens einen Bauteilfeld und reinigt ein Bauteil, das an einer Positioniereinheit festgelegt ist. Die Positioniereinheit ist lösbar auf ein Bauteilfeld aufgesetzt. Wenn mehr als ein Bauteilfeld vorgesehen ist, kann der Roboter das Bauteil, das sich aktuell in der einen Positioniereinheit befindet, reinigen. Währenddessen kann eine zweite Positioniereinheit auf ein anderes Bauteilfeld aufgebracht werden, dort befindet sich ein anderes zu reinigendes Bauteil, und kann währenddessen in einem dritten Bauteilfeld ein in der zugeordneten Positioniereinheit befindliches, bereits gereinigtes Bauteil entnommen werden.

Die Positioniereinheiten sind vorzugsweise baugleich. Sie ermöglichen es, ein Bauteil in einer speziellen räumlichen Ausrichtung zu halten. Wenn eine Anzahl baugleicher Bauteile gereinigt werden soll, hat man den Vorteil, dass diese immer wieder identisch positioniert sind. Dadurch können mit demselben Programm des Roboters, das für ein erstes dieser Bauteile erstellt wurde, alle anderen Bauteile gereinigt werden.

Besonders bevorzugt ist ein Bauteilfeld, das zusätzlich noch einen Drehkranz aufweist. Er ermöglicht einen Rotieren des aufgespannten Bauteils. Dies erfolgt insbesondere um eine vertikale Achse, also um die z-Richtung. Dadurch kann auch die Rückseite und können sonstige Flächen eines Bauteils so positioniert werden, dass sie von der Düse erreicht werden. Es ist also eine Komplettreinigung eines Bauteils möglich.

Die Passschrägen sind vorzugsweise am Bauteilfeld vorgesehen. Die mit ihnen zusammenwirkenden Vorsprünge sind dann an der Positioniereinheit angeordnet. Es kann aber auch andersherum sein. Passschrägen und Vorsprünge sind jeweils so angeordnet, dass sie bei einem vertikalen Aufsetzen einer Positioniereinheit (in negativer z-Richtung) auf ein Bauteilfeld eine präzise Position der Positioniereinheit auf dem Bauteilfeld bewirken. Wenn eine Positioniereinheit mit darauf eingespanntem, zu reinigendem Bauteil auf ein freies Bauteilfeld abgesenkt wird, finden sich die Vorsprünge in die Passschrägen ein und sorgen für eine exakte Position. Je nach Länge der Passschrägen und ihrer Winkel zur z-Richtung wird ein "Fangbereich" größer oder kleiner. Wenn die Positioniereinheit während ihres Absenkens einmal innerhalb des Fangbereichs ist, wird sie beim weiteren Absenken exakt positioniert. Ein exaktes Positionieren ist notwendig, weil der Roboter das zu reinigende Bauteil in einer exakten Position erwartet. Dadurch vermeidet man, dass der Roboter jeweils erst die Position des zu reinigenden Bauteils abfragen muss. Letzteres ist auch möglich, erfordert aber zusätzliche Zeit.

In der Regel wird eine Positioniereinheit mittels eines Gabelstaplers erfasst und auf ein freies Bauteilfeld abgesenkt. Die konkrete Ausbildung der Passschrägen bestimmt im Zusammenhang mit den Vorsprüngen den Fangbereich, innerhalb dessen die Positioniereinheit sich vor dem endgültigen Absenken befinden muss, um sich in die korrekte Position einfinden zu können. Für das anfängliche Positionieren oberhalb des Fangbereichs können Hilfsmittel verwendet werden, beispielsweise eine Kamera oder eine Positionierlehre für die Zinken des Gabelstaplers.

Die Passschrägen sind im Winkel zur z-Richtung verlaufende Flächen, die durch beliebige Körper, zum Beispiel Kegel, Pyramiden, Blechstreifen, Quader usw. realisiert sind. Die Vorsprünge kommenden Anlage an diese Flächen. Die Vorsprünge können beliebige Form haben, entscheidend ist nur, dass sie beim Annähern einer Positioniereinheit zu einem Bauteilfeld einen Erstkontakt herstellen und beim weiteren Absenken die Vorsprünge an den Passschrägen geführt werden. Es ist möglich, die Kombination aus Passschrägen und Vorsprüngen durch Kegel und Löcher zu realisieren.

Wenn die Positioniereinheit sich einmal auf dem Bauteilfeld befindet, wird sie dort aufgrund ihres Gewichtes gehalten. Dies gilt auch für den Reinigungsvorgang, während des Reinigungsvorgangs wird durch die Flüssigkeit ein erheblicher Impuls auf das Bauteil ausgeübt. Eine zusätzliche Befestigung ist nicht notwendig, kann aber vorgesehen sein.

Der Roboter und alle weiteren Antriebe sind über Steuerleitungen mit einer Steuerung verbunden. Diese kann in Entfernung von der Vorrichtung positioniert werden. Die Steuerung ermöglicht es, alle Maßnahmen der Vorrichtung durchzuführen, also alle Bewegungen des Roboters, der Drehgrenze, der Wasserversorgung usw. zu steuern. Vorzugsweise erfolgt das Beschicken eines gerade nicht vom Roboter bearbeiteten Bauteilfeldes und die Entnahme eines gereinigten Bauteils über ferngesteuerte, vorzugsweise autonom fahrende Gabelstapler. Dadurch kann in der Nähe eines Reinigungsvorgangs ein anliefern und abtransportieren erfolgen, ohne dass ein Mensch in die Nähe kommen muss. So ist es beispielsweise möglich, Führungskabel für Gabelstapler auf dem Boden zu verlegen, die zu den Bauteilfeldern führen.

Vorzugsweise weist die Vorrichtung eine Steuerung und einen Leitstand auf, Die Steuerung ist für den Industrieroboter und die Wasserzuführung ausgelegt. Sie befindet sich in dem Leitstand. Der Leitstand bietet Platz für mindestens einen Mitarbeiter und hat ein Fenster, das sich zwischen dem Basisgestell und dem Platz für den Mitarbeiter befindet.

Zwei Ausführungsbeispiele der Erfindung werden im Folgenden unter Bezugnahme auf die Zeichnung näher erläutert und beschrieben. Diese Ausführungsbeispiele sind nicht einschränkend zu verstehen, sie dienen der Erläuterung der Erfindung. In der Zeichnung zeigen:
- Fig. 1:: eine Draufsicht auf eine Hochdruckreinigungsvorrichtung mit drei zusätzlichen Bauteilfelder,
- Fig. 2:: eine Seitenansicht der Anlage gemäß Fig. 1,
- Fig. 3:: eine perspektivische Ansicht einer Positioniereinheit mit auf dieser eingespannten Bauteil und darunter eines Rahmens eines Bauteilfeldes,
- Fig. 4:: eine perspektivische Darstellung wie Fig. 3, jedoch nunmehr ohne Bauteil und ohne Rahmen,
- Fig. 5:: eine Seitenansicht eines zweiten Ausführungsbeispiels mit einer Kabine, in der sich eine Vorrichtung ähnlich derjenigen nach den Figuren 1-4 befindet, bei entnommener Seitenwand und
- Fig. 6:: eine Draufsicht auf die Anordnung gemäß Figur 5, bei entnommener oberer Abdeckung.

Für die Beschreibung der Erfindung wird ein rechtshändiges x-y-z-Koordinatensystem verwendet. Die x- und die y-Richtungen liegen in der horizontalen Ebene, die z-Richtung weist vertikal nach oben.

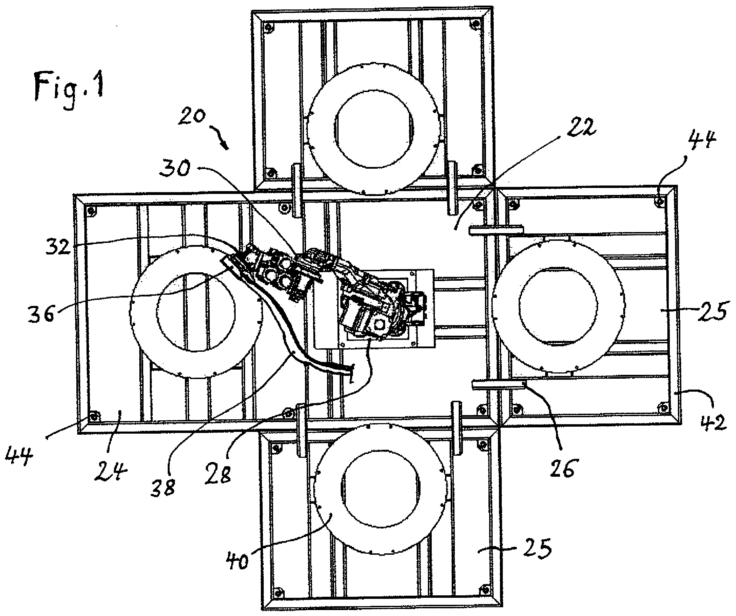

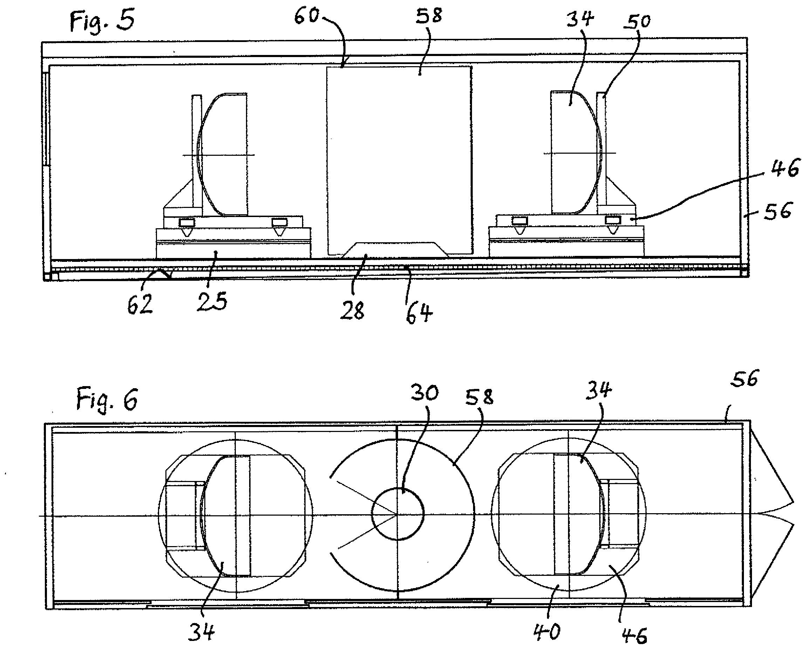

Im Folgenden werden beide Ausführungsbeispiele beschrieben, die Beschreibung richtet sich zunächst auf das erste Ausführungsbeispiel nach den Figuren 1 bis 4. Das zweite Ausführungsbeispiel nach den Figuren 5 und 6 wird nur insoweit beschrieben, als es sich vom ersten unterscheidet.

Die Hochdruckreinigungsvorrichtung hat ein Basisgestell 20. Dieses besteht zumindest aus einem Roboterfeld 22 und einem Bauteilfeld 24. Im Ausführungsbeispiel sind beide Felder 22, 24 einstückig zusammenhängend, dies muss aber nicht so sein. Das Basísgestell 20 nach dem 1. Ausführungsbeispiel hat noch drei zusätzliche Bauteilfelder 25, die separat vom Roboterfeld 22 sind. Das Roboterfeld 22 hat mehrere Seiten. Im Ausführungsbeispiel ist das Roboterfeld 22 quadratisch. An eine der Quadratseiten ist das erste Bauteilfeld 24 einstückig angesetzt, an den drei weiteren Seiten befindet sich jeweils ein zusätzliches Bauteilfeld 25. Jedes einzelne zusätzliche Bauteilfeld 25 ist über lösbare Verbindungsmittel 26 mit dem Roboterfeld 22 lösbar verbunden. Als Verbindungsmittel 26 kommen beispielsweise Klammern, Spannzangen usw. in Frage. Die Felder 22, 24 und 25 sind jeweils rahmenförmig, sie sind aus Profilteilen zusammengesetzt. Sie erstrecken sich im Wesentlichen in der x-y-Ebene und haben in der z-Ebene eine geringe Höhe. Sie sind ähnlich wie standardisierte Paletten ausgebildet.

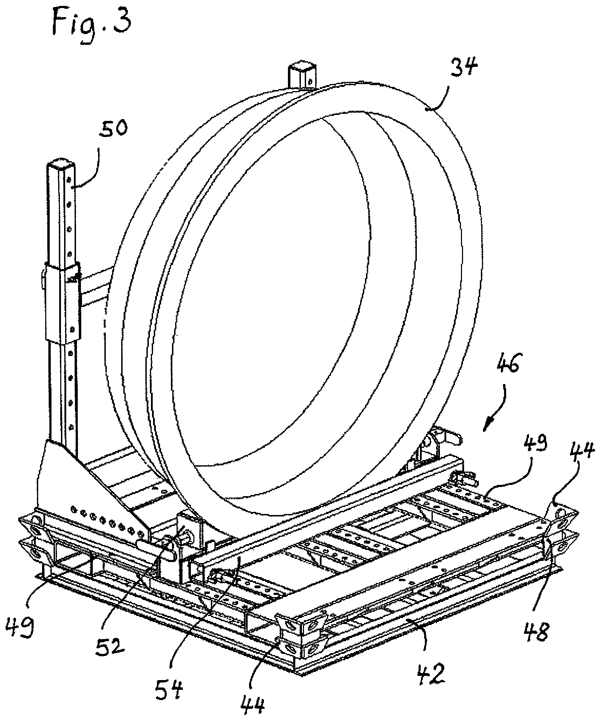

Auf dem Roboterfeld 22 befindet sich ein Podest 28, auf diesem ist ein Roboter 30 befestigt. Verwendet wird ein Industrieroboter, wie er aus dem Stand der Technik bekannt ist. Er hat eine vertikale, in z-Richtung verlaufende Hauptachse, um die er sich insgesamt drehen kann. Diese liegt in der Mitte des Roboterfeldes 22. Der Roboter 30 hat einen Arbeitsraum, der sich über die einzelnen Bauteilfelder 24, 25 erstreckt. Eine Roboterhand 32 kann Positionen oberhalb jedes einzelnen Bauteilfeldes 24, 25 erreichen, um ein dort angeortnetes, zu reinigendes Bauteil 34 (siehe z.B. Figur 3) erreichen zu können. An der Roboterhand 32 ist eine Hochdruckwasserdüse 36 gehalten, deren Position durch die Roboterhand 32 bestimmt wird. Verwendet werden mehrachsige Roboter 30, beispielsweise sechsachsige. Dadurch kann die räumliche Lage der Roboterhand 32 und damit der Hochdruckwasserdüse 36 im Wesentlichen frei vorgegeben werden. Die Hochdruckwasserdüse 36 ist mit einem Hochdruckschlauch 38 verbunden, Hochdruckwasserdüse 36 und Hochdruckschlauch 38 sind nach dem Stand der Technik ausgebildet.

Jedes Bauteilfeld 24, 25 ist mit einem Drehkranz 40 versehen. Er kann gesteuert um die z-Richtung als Achse geschwenkt werden. Oberhalb dieses Drehkranzes 40 befindet sich ein Rahmen 42 des jeweiligen Feldes 24, 25. Dieser Rahmen 42 wird mittels des Drehkranzes 40 rotiert. Der Rahmen 42 ist aus Figur 3 ersichtlich. Der Rahmen 42 hat Passschrägen 44 an seinen vier Ecken. Die Schrägen divergieren nach oben hin, sie streben also auseinander. Die Passschrägen 44 haben eine Höhe von 3 bis 15 cm und einen Winkel von etwa 20 bis 50° zur z-Richtung. Die Passschrägen 44 werden durch winkelförmige Teile gebildet. In Diagonalrichtung eines Feldes 24, 25 von außen betrachtet sehen sie aus wie der Bug eines Schiffes. In den Passschrägen 44 sind jeweils Löcher ausgebildet, die für die Aufnahme von Hebemitteln, beispielsweise eines Seils, dienen.

Vorzugsweise sind mindestens 3 Passschrägen 44 und demzufolge mindestens 3 Führungen 48 vorgesehen. Es wird eine eindeutige Positionierung in der x-y-Ebene erreicht. Es wird auch bei jeweils 3 Passschrägen 44 eine kippfreie Auflage erzielt. Vorzugsweise befinden sich die Passschrägen 44 in einer Ebene parallel zur x-y-Ebene. Vorzugsweise springen die Führungen 48 nach unten vom rahmenförmigen Unterbau 49 der Positioniereinheit 46 vor. Vorzugsweise dienen sie zudem als Füße, auf denen die Positioniereinheit 46 abgestellt werden kann. Mehrere rahmenförmige Unterbauten 49 der Positioniereinheit 46 können gestapelt werden, hierbei greifen die Führungen 48 eines oberen Unterbaus in die Passschrägen 44 des darunter befindlichen Unterbaus.

Wie insbesondere Figur 3 zeigt, befindet sich auf dem Bauteilfeld 24, 25, von dem in Figur 3 nur der Rahmen 42 dargestellt ist, eine Positioniereinheit 46. Sie dient der Aufnahme des Bauteils 34. Sie hat hierzu die entsprechenden Spannvorrichtungen, auf die später noch einmal eingegangen wird. Das Bauteil 34 wird außerhalb der Vorrichtung in einer Positioniereinheit 46 angeordnet und ausgerichtet. Die Positioniereinheit 46 mit dem Bauteil 34 wird danach mittels eines geeigneten Transportmittels, beispielsweise eines Gabelstaplers, auf ein freies Bauteilfeld 24, 25 aufgelegt. Anschließend erfolgt die Reinigung. Schließlich wird die Positioniereinheit 46 mit dem gereinigten Bauteil 34 wieder aus der Vorrichtung entnommen. Das Bauteil 34 wird dann von der Positioniereinheit 46 gelöst.

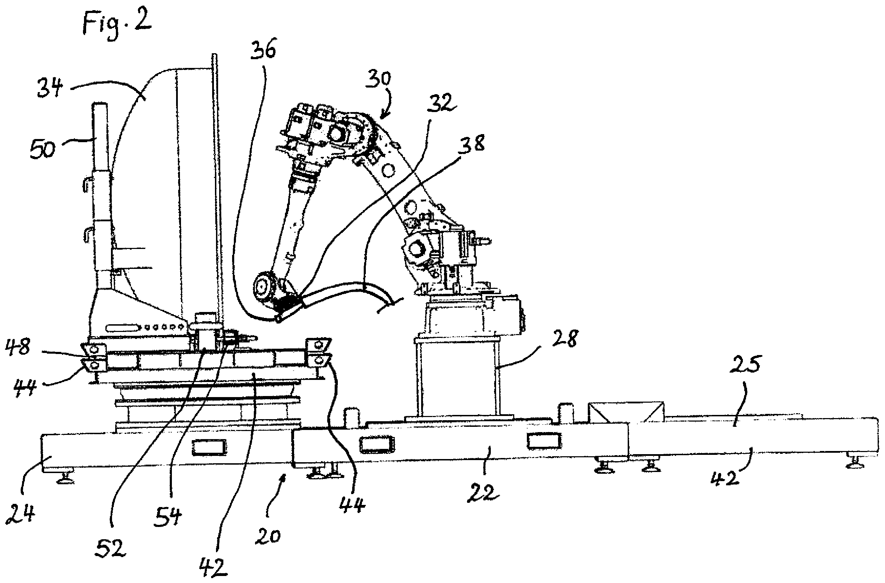

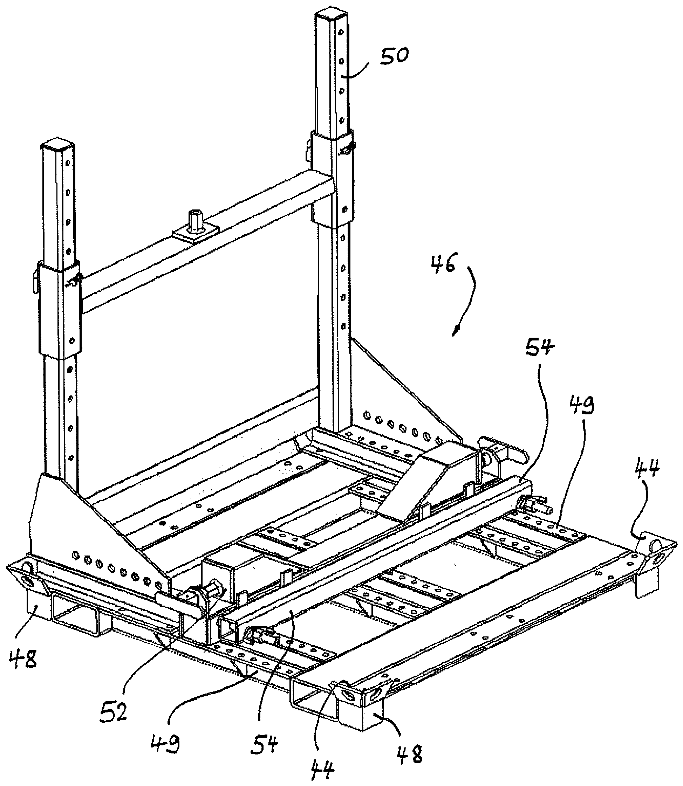

Die Positioniereinheit 46 hat den Passschrägen 44 angepasste Führungen 48. Der rahmenförmig Unterbau 49 der Positioniereinheit 46 hat vergleichbare Abmessungen wie der Rahmen 42. An den Eckbereichen des Unterbaus 49 sind jeweils Führungen 48 vorgesehen, siehe auch Fig. 4. Oberhalb dieser Führungen 48 hat jede Positionierieinheit 46 zusätzliche Passschrägen 44, die baugleich mit den Passschrägen des Rahmens 42 sind. Dies ermöglicht es, einen Rahmen 42 als Basisteil und damit Unterbau für eine Positioniereinheit 46 zu verwenden. Im gezeigten Ausführungsbeispiel hat der Unterbau 49 der Positioniereinheit 46 Aufnahmemittel für Zinken eines Gabelstaplers (nicht dargestellt), hierfür werden zwei parallele Hohlprofile verwendet, in deren Innenräume die Zinken eingreifen können. Derartige Hohlprofile sind in den Rahmen 42 nicht vorgesehen, können aber dort vorhanden sein. In den Feldern 22-25 sind jeweils derartige Hohlprofile vorgesehen, siehe zum Beispiel Figur 2.

Auf dem rahmenartigen Unterbau 49 sind mehrere Spannmittel 50-54 lösbar befestigt. Es wird mit einem Baukasten gearbeitet. Jeweils werden die nötigen Spannmittel und Hilfsmittel montiert, oder es werden bereits gewisse Spannmittel fest mit dem rahmenartigen Unterbau 49 verbunden. Konkret gezeigt sind in den Figuren 3 und 4 ein hinterer Spannrahmen 50, ein einstellbarer Lagerbock 52 für die Aufnahme eines Rundteils und ein Spannbock 54. Die Spannmittel 50 bis 54 werden je nach zu reinigendem Bauteil 34 ausgewählt und sind in der Regel von Bauteil 34 zu Bauteil 34 unterschiedlich. Wie insbesondere die Figuren 3 und 4 zeigen, hat der rahmenartige Unterbau 49 der Positioniereinheit 46 eine Vielzahl von Löchern, so dass dort eine Befestigung möglich ist.

Das Basisgestell 20 hat einstellbare Stützmittel 56 für seine Abstützung auf einem Untergrund, z.B. einen Platz auf einem Fabrikhof.

Im zweiten Ausführungsbeispiel ist eine Vorrichtung ähnlich derjenigen nach dem ersten Ausführungsbeispiel in einer Kabine 56 untergebracht. Dadurch wird ein allseitiger Schutz gegen Hochdruckwasser erreicht. Zudem kann die Kabine transportabel ausgebildet werden, beispielsweise in Form eines Containers ausgebildet sein. Die Kabine 56 hat eine stirnseitige Tür, die den Zutritt durch die gesamte Breite und Höhe der Stirnseite ermöglicht. Zudem ist an einer der Längsseiten mindestens eine Schiebetür vorgesehen. In der Kabine 56 kann auch ein Leitstand ausgebildet sein.

Die Vorrichtung selbst hat nun einen Spritzschutz 58, der den Roboter (nicht dargestellt) über mehr als 180° in der x-y-Ebene umgibt. Der Spritzschutz 58 ist drehbar um die z-Richtung. Er dreht sich vorzugsweise gemeinsam mit dem Roboter 30. Der Spritzschutz 58 behindert die Bewegungen des Roboters nicht, schränkt aber den Austritt von Hochdruck Wasserstrahlen auf einen Winkelbereich ein. Der Spritzschutz 58 ist im Wesentlichen zylindrisch. Er kann auch eine andere Form haben. Er umgibt den Roboter 30 vom Boden des Roboterfelds 22 aus zumindest bis zur höchsten Höhe, die der Roboter 30 erreichen kann, über den genannten Winketbereich. Vorzugsweise ist ein oberer Abschluss 60 vorgesehen, der den Spritzschutz 58 nach oben dicht abschließt. Dadurch können keine Strahlen nach oben austreten. Oder der Spritzschutz 58 hat keinen Abschluss 60 und ist soweit nach oben gezogen, dass er in der Nähe der Decke der Kabine 56 endet.

Die Kabine 56 ist länglich, es sind nur zwei Bauteilfelder 24, 25 untergebracht. Seitliche Bauteilfelder, wie sie Figur 1 zeigt, sind nicht vorhanden.

Unter der Vorrichtung ist eine Auffangwanne 62 angeordnet, sie erstreckt sich im konkreten Beispiel der Figuren 5 und 6 über den gesamten Boden der Kabine 56. Sie ist mit einer nicht dargestellten Absaugvorrichtung verbunden. Dadurch kann das Reinigungswasser zumindest zum Teil wiedergewonnen werden. Oberhalb der Auffangwanne 62 befindet sich ein Schwerlast-Gitterrost 64.

### Bezugszeichenliste

- 20: Basisgestell
- 22: Roboterfeld
- 24: 1. Bauteilfeld
- 25: zusätzliches Bauteilfeld
- 26: Verbindungsmittel
- 28: Podest
- 30: Roboter
- 32: Roboterhand
- 34: Bauteil
- 36: Hochdruck-Wasserdüse
- 38: Hochdruckschlauch
- 40: Drehkranz
- 42: Rahmen
- 44: Passschräge
- 46: Positioniereinheit
- 48: Führung
- 49: Unterbau
- 50: hinterer Spannrahmen
- 52: einstellbarer Lagerbock
- 54: Spannbock
- 56: Kabine
- 58: Spritzschutz
- 60: Abschluss
- 62: Auffangwanne
- 64: Schwerlast-Gitterrost

## Patentansprüche

1. Hochdruckreinigungsvorrichtung für verschmutzte Bauteile, insbesondere Bauteile aus der petrochemischen Industrie,
- mit einem Basisgestell (20), das ein Roboterfeld (22) und mindestens ein Bauteilfeld (24, 25) aufweist,
- mit einem Industrieroboter, der auf dem Roboterfeld (22) angeordnet ist, der einen Arbeitsraum aufweist, der sich im Wesentlichen über das mindestens eine Bauteilfeld (24, 25) erstreckt, und der eine Roboterhand (32) aufweist,
- mit einer Hochdruck-Wasserdüse (36), die über einen flexiblen Hochdruckschlauch (38) mit einer Hochdruckversorgung verbunden ist und die an der Roboterhand (32) angeordnet ist,
- mit mindestens einer Positioniereinheit (46), die lösbar mit dem Bauteilfeld (24) verbunden ist und Spannmittel (50, 52, 54) für die lösbare Befestigung eines Bauteils (34) aufweist, **dadurch gekennzeichnet dass** das Bauteilfeld (24, 25) Passschrägen (44) aufweist und die Positioniereinheit (46) den Passschrägen (44) angepasste Führungen (48) aufweist, die Passschrägen (44) im Zusammenwirken mit den Führungen (48) ein Positionieren der Positioniereinheit (46) auf dem Bauteilfeld (24, 25) bewirken und im eingesetzten Zustand einer Positioniereinheit (46) auf dem Bauteilfeld (24) die Führungen (48) an den Passschrägen (44) anliegen.

2. Hochdruckreinigungsvorrichtung nach Anspruch 1, **dadurch gekennzeichnet, dass** das Roboterfeld (22) mehrere Seiten aufweist, und dass es auf einer Seite mit dem mindestens einen Bauteilfeld (24, 25) einstückig verbunden ist.

3. Hochdruckreinigungsvorrichtung nach Anspruch 2, **dadurch gekennzeichnet, dass** mehr als ein Bauteilfeld (24, 25) vorgesehen ist, dass die Bauteilfelder (24) im wesentlichen baugleich sind, dass jedes Bauteilfeld (24, 25) über Verbindungsmittel (26) an einer Seite des Roboterfeldes angeordnet und mit diesem verbunden ist, dass von den mehreren Bauteilfeldern (24, 25) mindestens ein Bauteilfeld (24, 25) lösbar mit dem Roboterfeld verbunden ist, und dass jedes Bauteilfeld (24, 25) ausgebildet ist für die Aufnahme einer Positioniereinheit (46) und Passschrägen (44) aufweist.

4. Hochdruckreinigungsvorrichtung nach einem der vorangegangenen Ansprüche, **dadurch gekennzeichnet, dass** das Basisgestell (20) einstellbare Stützmittel (56) für seine Abstützung auf einem Untergrund aufweist.

5. Hochdruckreinigungsvorrichtung nach einem der vorangegangenen Ansprüche, **dadurch gekennzeichnet, dass** sie weiterhin eine Steuerung und einen Leitstand aufweist, dass die Steuerung für den Industrieroboter und die Wasserzuführung ausgelegt ist und sich in dem Leitstand befindet, und dass der Leitstand Platz für mindestens einen Mitarbeiter und ein Fenster aufweist, das sich zwischen dem Basisgestell (20) und dem Platz für den Mitarbeiter befindet.

6. Hochdruckreinigungsvorrichtung nach einem der vorangegangenen Ansprüche, **dadurch gekennzeichnet, dass** zumindest ein Bauteilfeld (24, 25) einen Drehkranz (40) aufweist, der sich unterhalb der Passschrägen (44) befindet.

7. Hochdruckreinigungsvorrichtung nach einem der vorangegangenen Ansprüche, **dadurch gekennzeichnet, dass** die mindestens eine Positioniereinheit (46) Aufnahmemittel für die Zinken eines Gabelstaplers oder entsprechende Handhabungsmittel für einen Transport aufweist.

8. Hochdruckreinigungsvorrichtung nach einem der vorangegangenen Ansprüche, **dadurch gekennzeichnet, dass** sich eine Arbeitsfläche des Basisgestells (20) in einer x-y- Ebene befindet, dass sich der Industrieroboter in z-Richtung vom Roboterfeld erhebt, und dass die vorhandenen Bauteilfelder (24, 25) sich im Arbeitsraum befinden.

9. Hochdruckreinigungsvorrichtung nach einem der vorangegangenen Ansprüche, **dadurch gekennzeichnet, dass** zumindest ein Bauteilfeld (24, 25) eine Basis und einen mit dieser Basis lösbar verbundenen Rahmen (42) aufweisen, und dass die Passschrägen (44) an dem Rahmen (42) angeordnet sind.

10. Hochdruckreinigungsvorrichtung nach einem der vorangegangenen Ansprüche, **dadurch gekennzeichnet, dass** die Passschrägen (44) von oben, in negativer z-Richtung, frei zugänglich sind.

11. Hochdruckreinigungsvorrichtung nach einem der vorangegangenen Ansprüche, **dadurch gekennzeichnet, dass** sie weiterhin eine Kabine (56) aufweist, In der sich das Basisgestell (20) befindet.

12. Hochdruckreinigungsvorrichtung nach einem der vorangegangenen Ansprüche, **dadurch gekennzeichnet, dass** auf dem Roboter (30) ein Spritzschutz (58) angeordnet ist, der sich gemeinsam mit dem Roboter (30) um die z-Achse dreht.

## Claims

1. A high-pressure cleaning device for dirty components, in particular components from the petrochemical industry,
- with a base frame (20) having a robot panel (22) and at least one component panel (24, 25),
- with an industrial robot, which is disposed on the robot panel (22), has a working space substantially extending across the at least one component panel (24, 25), and has a robotic hand (32),
- with a high-pressure water nozzle (36) which is connected to a high-pressure supply via a flexible high-pressure hose (38) and which is disposed on the robotic hand (32),
- with at least one positioning unit (46) which is detachably connected to the component panel (24) and has clamping means (50, 52, 54) for the detachable attachment of a component (34), **characterized in that**
the component panel (24, 25) has fitting chamfers (44) and the positioning unit (46) has guides (48) adapted to the fitting chamfers (44), the fitting chamfers (44), in cooperation with the guides (48), cause the positioning unit (46) to be positioned on the component panel (24, 25), and the guides (48) rest against the fitting chamfers (44) in the inserted state of a positioning unit (46) on the component panel (24).

2. The high-pressure cleaning device according to claim 1, **characterized in that** the robot panel (22) has several sides, and that it is integrally connected on one side to the at least one component panel (24, 25).

3. The high-pressure cleaning device according to claim 2, **characterized in that** more than one component panel (24, 25) is provided, that the component panels (24) are substantially identical in construction, that each component panel (24, 25) is disposed on one side of the robot panel and connected therewith via connecting means (26), that, of the several component panels (24, 25), at least one component panel (24, 25) is detachably connected to the robot panel, and that each component panel (24, 25) is configured for accommodating a positioning unit (46) and fitting chamfers (44).

4. The high-pressure cleaning device according to any one of the preceding claims, **characterized in that** the base frame (20) has adjustable supporting means (56) for supporting it on a ground surface.

5. The high-pressure cleaning device according to any one of the preceding claims, **characterized in that** it further has a control unit and a control center, that the control unit is designed for the industrial robot and the water supply, and is located in the control center, and that the control center has space for at least one employee, and a window located between the base frame (20) and the space for the employee.

6. The high-pressure cleaning device according to any one of the preceding claims, **characterized in that** at least one component panel (24, 25) has a slewing ring (40) located underneath the fitting chamfers (44).

7. The high-pressure cleaning device according to any one the preceding claims, **characterized in that** the at least one positioning unit (46) has receiving means for the fork arms of a fork lift or corresponding handling means for transport.

8. The high-pressure cleaning device according to any one of the preceding claims, **characterized in that** a work surface of the base frame (20) is located in an x-y-plane, that the industrial robot rises in the z-direction from the robot panel, and that the component panels (24, 25) that are present are located in the working space.

9. The high-pressure cleaning device according to any one of the preceding claims, **characterized in that** at least one component panel (24, 25) has a base and a frame (42) detachably connected to this base, and that the fitting chamfers (44) are disposed on the frame (42).

10. The high-pressure cleaning device according to any one of the preceding claims, **characterized in that** the fitting chamfers (44) are freely accessible from above, in the negative z-direction.

11. The high-pressure cleaning device according to any one of the preceding claims, **characterized in that** it further has a cabin (56) in which the base frame (20) is located.

12. The high-pressure cleaning device according to any one of the preceding claims, **characterized in that** a spray guard (58) Is disposed on the robot (30), which rotates about the z-axis together with the robot (30).

## Revendications

1. Dispositif de nettoyage à haute pression pour des composants encrassés, en particulier des composants de l'industrie pétrochimique, comprenant
- un bâti de base (20) qui comprend un champ de robot (22) et au moins un champ de composant (24, 25),
- un robot industriel qui est agencé sur le champ de robot (22), qui présente un espace de travail qui s'étend pour l'essentiel sur ledit au moins un champ de composant (24, 25), et qui présente une main robotique (32),
- une buse d'eau à haute pression (36) qui est connectée via un tuyau flexible haute pression (38) à une alimentation haute pression et qui est disposée sur ladite main robotique (32),
- au moins une unité de positionnement (46) qui est reliée de manière amovible au champ de composant (24) et présente des moyens de serrage (50, 52, 54) pour la fixation amovible d'un composant (34), **caractérisé par le fait que** le champ de composant (24, 25) présente des pentes d'ajustage (44) et l'unité de positionnement (46) présente des guides (48) adaptés aux pentes d'ajustage (44), lesdltes pentes d'ajustage (44) provoquant, en coopération avec les guides (48), un positionnement de l'unité de positionnement (46) sur le champ de composant (24, 25) et les guides (48) s'appliquent contre les pentes d'ajustage (44) lorsqu'une unité de positionnement (46) est mise en place sur le champ de composant (24).

2. Dispositif de nettoyage à haute pression selon la revendication 1, **caractérisé par le fait que** le champ de robot (22) présente plusieurs côtés et qu'il est relié d'un côté d'un seul tenant audit au moins un champ de composant (24, 25).

3. Dispositif de nettoyage à haute pression selon la revendication 2, **caractérisé par le fait que** plus d'un champ de composant (24, 25) est prévu, que les champs de composant (24) sont de construction pour l'essentiel identique, que chaque champ de composant (24, 25) est disposé par l'intermédiaire de moyens de liaison (26) sur un côté du champ de robot et est relié à celui-ci, qu'au moins un champ de composant (24, 25) parmi ladite pluralité de champs de composant (24, 25) est relié de manière amovible au champ de robot et que chaque champ de composant (24, 25) est conçu pour recevoir une unité de positionnement (46) et présente des pentes d'ajustage (44).

4. Dispositif de nettoyage à haute pression selon l'une quelconque des revendications précédentes, **caractérisé par le fait que** le bâti de base (20) comprend des moyens de support (56) réglables pour appuyer celui-ci sur un sol.

5. Dispositif de nettoyage à haute pression selon l'une quelconque des revendications précédentes, **caractérisé par le fait qu'**il comprend en outre une commande et un poste de manoeuvre, que la commande est conçue pour le robot industriel et l'alimentation en eau et est située dans ledit poste de manoeuvre et que ledit poste de manoeuvre présente de la place pour au moins un collaborateur ainsi qu'une fenêtre qui est située entre le bâti de base (20) et la place pour le collaborateur.

6. Dispositif de nettoyage à haute pression selon l'une quelconque des revendications précédentes, **caractérisé par le fait qu'**au moins un champ de composant (24, 25) présente une couronne d'orientation (40) qui est située au-dessous des pentes d'ajustage (44).

7. Dispositif de nettoyage à haute pression selon l'une quelconque des revendications précédentes, **caractérisé par le fait que** ladite au moins une unité de positionnement (46) présente des moyens de logement pour les dents d'un chariot élévateur à fourche ou des moyens de manipulation correspondants pour un transport.

8. Dispositif de nettoyage à haute pression selon l'une quelconque des revendications précédentes, **caractérisé par le fait qu'**une surface de travail du bâti de base (20) se trouve dans un plan x-y, que le robot industriel s'élève dans la direction z à partir du champ de robot et que les champs de composant (24, 25) existants sont situés à l'intérieur de l'espace de travail.

9. Dispositif de nettoyage à haute pression selon l'une quelconque des revendications précédentes, **caractérisé par le fait qu'**au moins un champ de composant (24, 25) présente une base et un cadre relié de manière amovible à cette base, et que les pentes d'ajustage (44) sont disposées sur ledit cadre (42).

10. Dispositif de nettoyage à haute pression selon l'une quelconque des revendications précédentes, **caractérisé par le fait que** les pentes d'ajustage (44) sont librement accessibles par le haut dans la direction z négative.

11. Dispositif de nettoyage à haute pression selon l'une quelconque des revendications précédentes, **caractérisé par le fait qu'**il comprend en outre une cabine (56) à l'intérieur de laquelle est situé ledit bâti de base (20).

12. Dispositif de nettoyage à haute pression selon l'une quelconque des revendications précédentes, **caractérisé par le fait qu'**une protection anti-éclaboussures (58) est disposée sur le robot (30) et tourne conjointement avec le robot (30) autour de l'axe z.
